Europäisches Patentamt

European Patent Office

Office européen des brevets

(19)

(11) Numéro de publication : **0 329 581 B1**

(12) # FASCICULE DE BREVET EUROPEEN

(45) Date de publication du fascicule du brevet :
**20.05.92 Bulletin 92/21**

(51) Int. Cl.⁵ : **G21C 19/06, G21F 5/00**

(21) Numéro de dépôt : **89420057.5**

(22) Date de dépôt : **16.02.89**

(54) Casier de rangement d'élements combustibles nucléaires.

(30) Priorité : **19.02.88 FR 8802506**

(43) Date de publication de la demande :
**23.08.89 Bulletin 89/34**

(45) Mention de la délivrance du brevet :
**20.05.92 Bulletin 92/21**

(84) Etats contractants désignés :
**BE CH DE ES FR GB IT LI**

(56) Documents cités :
**EP-A- 0 158 849
FR-A- 2 462 767
FR-A- 2 543 350
US-A- 4 034 227
US-A- 4 399 366**

(73) Titulaire : **TRANSNUCLEAIRE S.A.
11, 11 Bis Rue Christophe Colomb
F-75008 Paris (FR)**

(72) Inventeur : **Blum, Paul
17, rue Charles de Gaulle
F-78860 Saint Nom-la-Breteche (FR)**
Inventeur : **Meyer, Patrick
66, rue Jean-Jaurès
F-92170 Vanves (FR)**

(74) Mandataire : **Vanlaer, Marcel et al
PECHINEY 28, rue de Bonnel
F-69433 Lyon Cédex 3 (FR)**

EP 0 329 581 B1

Jouve, 18, rue Saint-Denis, 75001 PARIS

## Description

## DOMAINE TECHNIQUE

L'invention concerne un casier de rangement d'éléments combustibles nucléaires constitué d'une pluralité d'alvéoles dans chacune desquelles est introduit un élément combustible à ranger.

Ces casiers, ou paniers, de rangement servent à stocker en piscine ou à sec et/ou à transporter en enceinte blindée, asséchée après chargement, les éléments combustibles.

## ETAT DE LA TECHNIQUE

Les casiers de rangement des éléments combustibles nucléaires sont habituellement constitués d'alvéoles prismatiques adjacentes, le plus souvent à section carrée, de forme allongée selon un grand axe. La forme de la section des alvéoles est identique en général à celle des éléments combustibles à ranger, leur hauteur est au moins égale à celle desdits éléments.

Les casiers selon l'invention conviennent pour le rangement d'éléments combustibles nucléaires non irradiés, nécessitant des conditions sous critiques, le combustible pouvant être à base d'oxyde d'uranium exclusivement ou de tous mélanges d'oxydes combustibles, mais ils sont surtout adaptés au rangement et au transport, à sec, des éléments combustibles irradiés en enceinte blindée.

Dans ce cas tout casier, également appelé panier de rangement, doit remplir simultanément plusieurs fonctions:

– transfert thermique de la chaleur générée par les éléments combustibles irradiés rangés, vers la paroi de l'enceinte blindée afin de l'évacuer. Cette fonction est d'autant mieux assurée que le matériau constituant le casier est bon conducteur thermique et que le contact entre le casier et la paroi de l'enceinte est mieux assuré

– absorption neutronique pour garantir un état sous-critique du panier chargé de combustible, soit à sec, soit lorsque celui-ci est immergé dans l'eau lors du stockage en piscine ou lors des opérations de chargement et de déchargement d'enceintes blindées effectuées également en piscine. Cette fonction est remplie par l'emploi de matériaux renfermant des éléments absorbeurs de neutrons, tels que B,Gd,Hf,Cd,In, Li..., lesdits matériaux étant utilisés directement dans la conception du casier, ou par l'emploi d'absorbeurs de neutrons introduits dans les éléments combustibles, ainsi que par la réalisation d'une bonne modération neutronique obtenue en ménageant des espaces vides au voisinage desdits matériaux absorbeurs de neutrons ou neutrophages

– résistance mécanique suffisamment élevée pour supporter la charge des éléments combustibles en cours de transport et pour maintenir la géométrie du casier même en cas de choc de manière à conserver des conditions sous critiques et à éviter les risques de détérioration des éléments et des crayons combustibles par suite de leur échauffement et/ou leur écrasement.

Ordinairement, ces fonctions sont remplies en confectionnant les parois des alvéoles à l'aide de matériaux disposés en plusieurs couches superposées, par exemple matériau du type sandwich constitué d'au moins deux couches : une couche d'un alliage assurant les fonctions résistance mécanique et transfert thermique dont les caractéristiques sont de préférence homologuées et une couche d'un matériau, alliage ou composite, contenant un absorbeur de neutron, matériau dont les caractéristiques mécanique et thermique ne sont en général pas homologuées. Ces couches sont solidarisées entre elles par tous moyens connus, par exemple colaminage, dépôt électrolytique, assemblage mécanique, soudure, etc...

Le matériau contenant l'absorbeur de neutrons peut être par exemple de l'acier inoxydable renfermant de l'ordre de 1 % de bore ou un alliage d'aluminium renfermant de l'ordre de 3 % de bore, ou un produit fritté carbure de bore-aluminium revêtu ou non d'aluminium, ou du cadmium déposé électrolytiquement sur un support métallique. Quand on utilise un alliage d'aluminium, il est habituellement fourni sous forme de bandes qui sont ensuite accolées aux autres couches comme indiqué plus haut. Ces bandes peuvent être obtenues par laminage ou extrusion à partir de billettes de dimensions suffisantes qui doivent avoir une bonne homogénéité et une bonne santé (absence de soufflures, criques, etc), ce qui nécessite d'autant plus de précautions que la taille desdites billettes est importante. Malgré les précautions prises, le contenu minimum garanti en bore du produit plat est souvent inférieur de un point à celui du produit de départ.

En fait, la forme économique courante sous laquelle se trouve ces matériaux est la baguette ou le fil livré en bobine, obtenus par coulée continue, par exemple, d'un rond de quelque centimètres de diamètre qui est ensuite laminé et/ou étiré. On fabrique ainsi du fil d'aluminium au bore de diamètre voisin de 10 mm et dont le contenu en bore garanti est habituellement de 2,5% ou 3,5%.

D'autres conceptions de parois d'alvéoles, également aptes à remplir la fonction absorption de neutrons, ont été décrites. Par exemple le brevet US-A-4034227 (Soot) décrit des éléments de parois qui peuvent être assemblés entre eux à l'aide de tenons spéciaux, de façon à former un casier; ces éléments sont des pièces spécialement filées dans le sens de la longueur des alvéoles, ayant une section droite de forme compliquée présentant une série d'encoches en saillie réparties en quinconce de part et d'autre d'une paroi plane, parallèles au sens de filage. Ces encoches sont ouvertes selon une génératrice et prévues pour recevoir des crayons neutrophages.

Une telle conception utilisant des crayons absorbeurs de neutrons, si elle permet d'éviter la mise en oeuvre délicate du type de matériau décrit plus haut, nécessite néanmoins de filer des pièces ayant une section transversale importante et un profile compliqué; ceci restreint beaucoup le nombre des fournisseurs potentiels étant donné la taille des presses à mettre en oeuvre et les problèmes de filage en découlant. Un tel assemblage présente également l'inconvénient de comporter une multiplicité de liaisons du type tenon-mortaise (36,38,38...) situées dans les angles des alvéoles qui nuisent à l'obtention d'une bonne résistance mécanique et d'une conductibilité thermique suffisante.

## OBJECT DE L'INVENTION

L'invention a pour objet un casier de rangement d'éléments combustibles irradiés ou non irradiés, casier pouvant servir au stockage à sec, ou au transport à sec en enceinte blindée desdits éléments combustibles. Ce casier doit remplir des fonctions de résistance mécanique, de transfert thermique et d'absorption neutronique.

Dans le but de simplifier la mise en oeuvre des matériaux destinés à être employés dans la confection desdits casiers, et en conséquence d'en diminuer le coût, tout en ayant des casiers de performances mécanique, thermique et neutronique facilement homologables, l'invention a pour objectif d'utiliser des matériaux et demi-produits aisément disponibles sur le marché, de caractéristiques connues, utilisables directement tels quels sans opération de transformation métallurgique intermédiaire et ne nécessitant que des moyens simples d'assemblage. Ces matériaux et demi-produits étant de préférence normalisés ou standards sont généralement plus fiables et moins coûteux que des pièces filées, laminées ou composites spécialement étudiées et réalisées.

Un autre object de l'invention est d'avoir un casier dans lequel au moins les fonctions résistance mécanique et transfert thermique sont séparées de la fonction absorption neutronique, les trois fonctions pouvant également être séparées, ce qui facilite le calcul des performances du panier et son homologation.

Un autre object de l'invention est d'avoir un casier dans lequel la barrière neutronique peut être à volonté continue ou de préférence discrète.

## DESCRIPTION DE L'INVENTION

L'invention est un casier, appelé également panier ou rack, de rangement d'éléments combustibles nucléaires, en vue de leur stockage ou de préférence de leur transport à sec, constitué d'une pluralité d'alvéoles prismatiques adjacentes de grande longueur et parallèles entre elles, lesdites alvéoles étant destinées à recevoir lesdits éléments combustibles et formant un ensemble devant assurer des fonctions de résistance mécaniques, conductibilité thermique et d'absorption neutronique, caractérisé en ce que, dans le but d'utiliser pour sa construction des matériaux connus et fiables, remplissant les fonctions de résistance mécanique et de conductibilité thermiques, et d'assurer séparément au moins la fonction d'absorption neutronique, les parois des alvéoles sont constituées d'un empilement entrecroisé et ordonné d'éléments de structure allongés, du type profilés, de section constante, en matériau courant, disposés en couches successives perpendiculairement à l'axe des alvéoles, lesdites parois assurant le contrôle de criticité soit grâce à leur épaisseur et à des tiges neutrophages disposées à l'intérieur desdites parois parallèlement ou perpendiculairement à l'axe des alvéoles, soit en alternant dans l'empilement d'une part des éléments de structure en matériau courant assurant les fonctions de résistance mécanique et/ou de conductibilité thermique d'autre part des éléments de structure en matériau neutrophage assurant la fonction d'absorption neutronique, ledit empilement étant tel que le casier remplisse l'ensemble des fonctions requises.

Ainsi, le casier selon l'invention sert au rangement d'éléments combustibles nucléaires dans des conditions nécessitant la présence d'un asborbeur de neutrons, compte tenu de leur géométrie et de leur composition.

Un tel casier de rangement peut servir soit au stockage des éléments combustibles en piscine ou mieux à sec soit préférentiellement au transport à sec desdits éléments. Dans ce cas le casier est introduit dans une enceinte blindée avant ou après chargement des éléments combustibles. Si les éléments transportés ont été irradiés, l'enceinte sert à la fois de protection biologique, mécanique et d'évacuateur de chaleur, le panier de rangement jouant le rôle d'absorption neutronique et étant le seul moyen de transfert de la chaleur dégagée par les éléments combustibles irradiés vers l'enceinte blindée ; ledit panier joue également un rôle essentiel de tenue mécanique, en particulier pour éviter un écrasement éventuel des éléments en cas d'accident, et pour supporter la charge des éléments combustibles rangés, en cours de transport horizontal.

Un tel casier peut être également auto-portant, il suffit pour cela de le renforcer par tous moyens appropriés et de le munir de dispositifs de manutention et d'un fond, et éventuellement d'un couvercle.

Le casier selon l'invention est constitué d'une pluralité d'alvéoles contiguës, prismatiques, leurs sections droites sont quelconques et en général toutes identiques entre elles. Elles ont des parois communes, d'épaisseur (dans le sens transversal à l'axe des alvéoles) suffisante pour assurer les fonctions de résistance mécanique et conductibilité thermique, et pour éventuellement contenir les tiges neutrophages, comme cela sera vu plus loin.

Habituellement, lesdites sections droites ont la même forme que les éléments combustibles rangés mais peuvent aussi être de forme différente; elles sont souvent rectangulaires ou mieux carrées. Ainsi, par exemple dans une alvéole à section carrée, on peut ranger des éléments à section carrée, ronde ou hexagonale. La profondeur des alvéoles est généralement un peu supérieure à la longueur des éléments combustibles à y ranger, par exemple pour des éléments combustibles PWR irradiés de longueur 4,1 m elle atteint environ 4,15 m.

Les éléments de structure choisis pour réaliser l'empilement ordonné sont allongés avec une section droite ayant un profil sensiblement constant; ce sont de préférence des profilés de type courant, à section droite de préférence anguleuse, ayant des formes simples tels que L,U,T,I,H, croix, tube ou barre pleine à section carrée ou rectangulaire, bande plate, etc... On peut également utiliser comme éléments de structure des couples de bandes plates minces allongées dont les grandes faces sont parallèles entre elles et disposées parallèlement à l'axe des alvéoles, l'espace ainsi délimité entre lesdites bandes étant d'épaisseur suffisante pour y introduire les tiges neutrophages, parallèlement ou perpendiculairement à l'axe des alvéoles.
On peut aussi utiliser comme élément de structure des plats filés allongés, de section rectangulaire, dans l'épaisseur desquels sont pratiqués des logements de forme tubulaire, alignés, pouvant accueillir les tiges neutrophages.

Tous ces différents types d'éléments de structure peuvent être utilisés seuls ou en combinaison.

Ils sont en général rectilignes, mais peuvent aussi être pliés régulièrement, les arêtes des pliures étant parallèles entre elles et perpendiculaires au plan contenant la ligne brisée résultante.

L'empilement est réalisé parallèlement à l'axe des alvéoles à obtenir, la grande longueur des éléments de structure étant dirigée perpendiculairement à l'axe des alvéoles. Les éléments de structure sont empilés en couches ou rangées successives de façon à ce que dans chacune d'elles ils aient une direction générale bien définie, les directions étant croisées d'une couche à l'autre. Il y a habituellement autant de direction qu'il doit y avoir de parois, mais ce n'est pas une nécessité : par exemple pour des alvéoles à section hexagonale, on peut avoir 2 ou 3 directions.

Les éléments de structure ayant une même direction et situés dans des couches différentes sont empilés, alignés, parallèlement au grand axe des alvéoles, de façon à former les parois desdites alvéoles. La longueur des éléments de structure doit être suffisante pour qu'un même dit élément intéresse plusieurs alvéoles.

Ainsi, par exemple, pour obtenir un casier vertical alvéolaire à maille carrée, on réalise une première couche en disposant dans un plan horizontal les éléments de structure parallèlement à une direction A et espacés les uns des autres d'une distance correspondant à la maille des alvéoles, puis sur cette couche on réalise une deuxième couche horizontale en disposant les éléments de structure de la même façon, mais dans une direction B perpendiculaire à la direction A. Ainsi, on voit qu'en alternant des couches de direction A et B en prenant soin d'aligner dans le sens vertical les éléments empilés ayant la même direction, on obtiendra bien une structure alvéolaire à maille carrée.

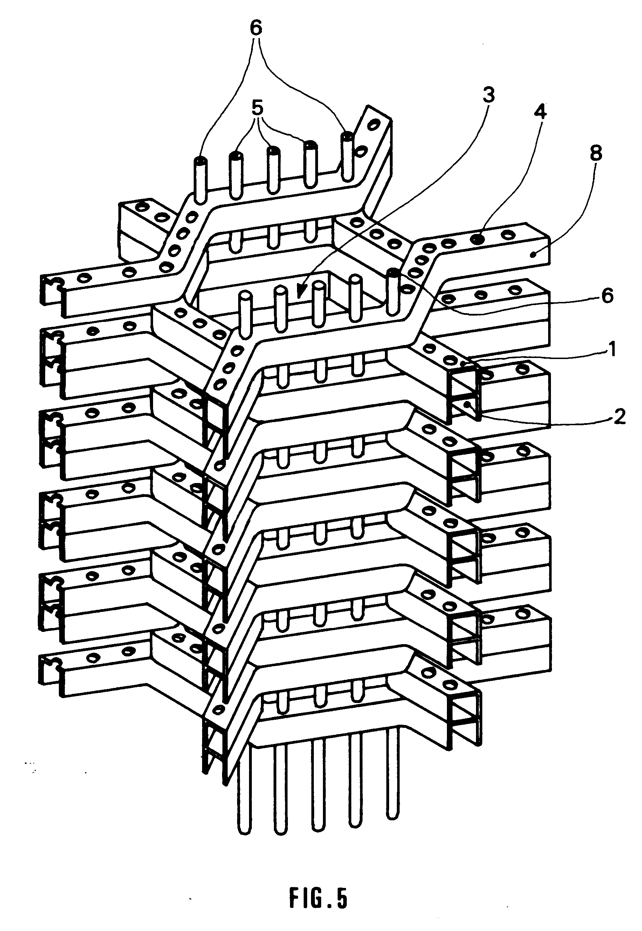

De façon similaire, on obtiendra des alvéoles ayant des mailles hexagonales en croisant dans deux ou préférentiellement trois directions, faisant entre elles des angles de 60°, des couches d'éléments de structure, ces derniers ayant été préalablement pliés régulièrement à 120° de façon à réaliser une ligne brisée dont chaque segment a la dimension d'un côté de l'alvéole. Un tel type d'empilement, illustré par la figure 5, sera décrit plus en détail ultérieurement.

Les éléments de structure des différentes couches ou rangées sont rendus solidaires par tous moyens de liaison connus tels que goujons, boulons, soudures, plats, cavaliers, équerres, rivets, tirants, plaques ajourées, etc... de façon à maintenir la cohésion et la rigidité de l'empilement conduisant à la structure alvéolaire.

Complémentairement, on peut augmenter la compacité de l'empilement tout en maintenant sa cohérence et sa rigidité, en munissant les éléments de structure d'encoches ou de saignées de positionnement coopérant les unes avec les autres, comme dans le cas de certains casiers à bouteilles ou de la construction de chalets de montagne dont les murs sont assemblés par ce procédé d'emboîtement. Dans ce cas, on peut aller jusqu'à supprimer tout ajour dans les parois.
De préférence, on introduit des tiges neutrophages dans l'épaisseur des parois des alvéoles, dans la direction souhaitée, c'est-à-dire parallèlement ou perpendiculairement à l'axe des alvéoles, des trous correspondants ayant été ménagés, si nécessaire, dans les éléments de structure. Ainsi, si on utilise un empilement d'éléments de structure profilés autres que des bandes plates, par exemple de forme en H ou U, on perce des trous dans les semelles ou âmes des profilés qui sont perpendiculaires à l'axe des alvéoles, les tiges neutrophages étant alors parallèles à l'axe desdites alvéoles.

De même, si on utilise comme élément de structure des plats filés, entre-croisés et emboîtés grâce à des saignées, de section droite rectangulaire et d'épaisseur suffisante, on ménage des logements tubulaires dans le sens du filage pour accueillir les tiges neutrophages au moyen, par exemple, d'une filière à pont.

Les éléments de structure peuvent aussi être renforcés localement, par exemple par des surépaisseurs judicieusement disposées en particulier à proximité des zones qui ont été percées pour recevoir les tiges neutrophages.

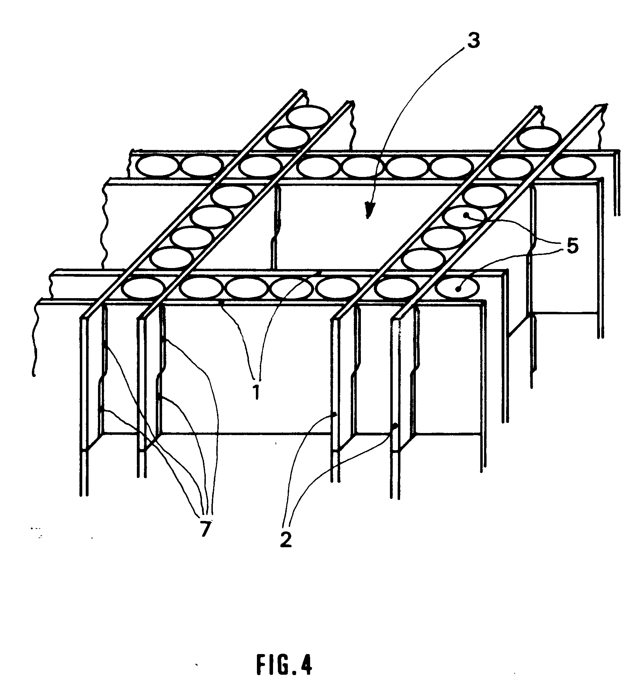

Par contre, si les parois des alvéoles sont réalisées par un empilement d'éléments de structure constitué de couples de bande plate de faible épaisseur, dont les faces sont parallèles entre elles et à l'axe des alvéoles, les tiges neutrophages sont introduites directement dans l'espace délimité par les faces parallèles des plats en regard, comme cela sera illustré dans la figure 4.

Les tiges neutrophages peuvent être disposées perpendiculairement à l'axe des alvéoles, dans ce cas, elles améliorent les autres fonctions (résistance mécanique et transfert thermique).

Les éléments de structure constituant les parois des alvéoles doivent au moins remplir les fonctions de résistance mécanique et transfert thermique. Pour cela, on pourra choisir, pour réaliser les profilés, des matériaux remplissant ces deux fonctions, comme par exemple les aciers (ordinaire, inox ou spéciaux), l'aluminium, le cuivre, le magnésium ou leurs alliages, en général tous métaux ou matériaux donnant des profilés ayant des caractéristiques mécaniques et thermiques répondant aux exigences.

On peut également utiliser des matériaux ne remplissant qu'une seule fonction, par exemple on alternera des couches d'éléments de structure en matériaux à forte résistance mécanique tels que l'acier, et d'autres à forte conduction thermique tels que le cuivre.

Dans certains cas particuliers, il est également possible d'insérer dans l'empilement constitutif du casier alvéolaire des éléments de structure en matériau neutrophage. Ainsi, on peut empiler lesdits éléments de structure en matériau neutrophage en alternance avec ceux assurant la résistance mécanique et le transfert thermique. Cette alternance peut être soit une alternance d'une couche à l'autre, soit une alternance à l'intérieur d'une même couche, soit une combinaison des deux.

Le matériau neutrophage utilisé dans l'invention contient obligatoirement au moins un élément neutrophage tel que B,Gd,Hf,Cd,In, Li, etc... Il est constitué par cet élément lui-même ou un de ses composés, utilisés tels quels ou en combinaison avec un autre matériau en donnant un composite. On peut citer comme matériau :

– les métaux ou alliages métalliques, tels que Al, Cu ou leurs alliages, chargés en bore ou autre élément neutrophage,
– les différents types de produits frittés (y compris le frittage par extrusion à travers une filière) contenant du bore ou autre, par exemple $B_4C.Al$ ou $B_4C.Cu$
– les céramiques ou verres contenant du bore ou autre.

Ces différents composites sont utilisés en général sous forme de tige avec ou sans gaine. Ces tiges peuvent également être obtenues par filage de billettes d'alliage ou de cermet obtenues par tous procédés connus, y compris ceux du type pulvérisation-dépôt.

Il est cependant avantageux d'utiliser tout matériau aisément disponible sur le marché, en particulier du fil d'alliage-mère Aluminium-Bore, contenant 2,5 ou 3,5% de bore, aisément disponible, étant utilisé à d'autres applications grandes consommatrices de ce type de produit (par exemple affinage de l'aluminium).

Les tiges neutrophages couvrent au moins une partie de la longueur ou de la largeur, selon leur direction d'implantation, des parois des alvéoles du casier et peuvent en couvrir la totalité. La densité d'implantation des barres est adaptée aux besoins. Une même tige neutrophage peut être constituée d'une succession de barres élémentaires de longueur réduite.

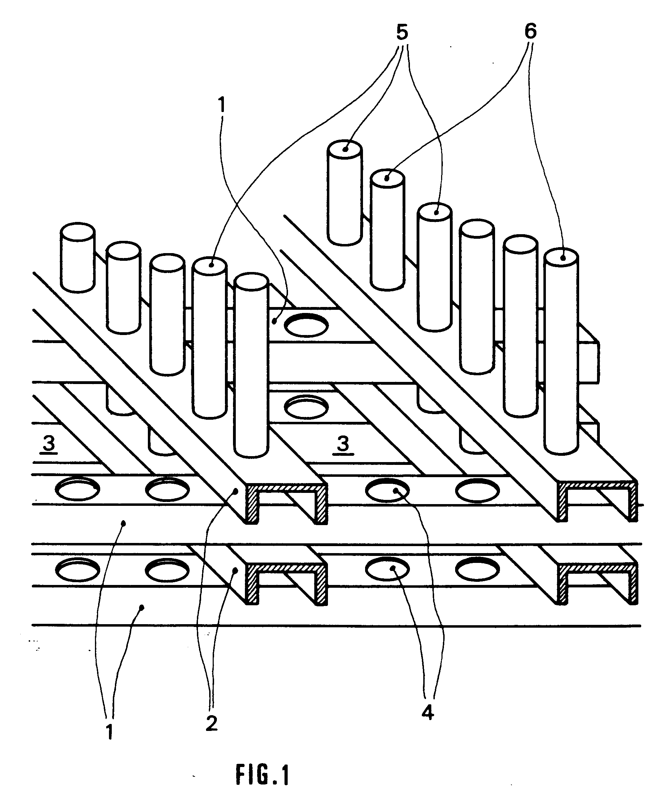

Pour illustrer l'invention, les fig. 1 à 6 donnent différents exemples d'empilement utilisant divers types de profilés simples.

. La figure 1 représente un empilement réalisé pour obtenir un casier de rangement à alvéoles de section droite rectangulaire ou carrée; l'empilement est constitué d'éléments de structure 1 et 2 qui sont des profilés en forme de U, mais qui pourraient tout aussi bien être des barres pleines ou des tubes creux de même section droite. Les éléments 1 sont tous orientés dans la même direction; dans une même couche, ils sont donc parallèles et séparés par une distance égale à celle de la maille des alvéoles 3. Les éléments 2 situés dans les couches voisines sont également parallèles entre eux, mais perpendiculaires aux éléments 1, et séparés par une distance égale à la maille des alvéoles dans cette direction. Les trous 4 ont été percés dans les semelles horizontales et permettent d'introduire les tiges neutrophages 5 dans la paroi de l'alvéole 3 parallèlement à son axe. Dans ce cas les parois des alvéoles sont ajourées.

L'assemblage est réalisé par des tirants 6 situés à l'intersection des éléments de structure 1 et 2. Ils sont en matériau ayant une bonne résistance mécanique, par exemple en acier inox; l'assemblage peut être rigidifié par des plaques d'extrémité, non représentées, ajourées selon le dessin des alvéoles.

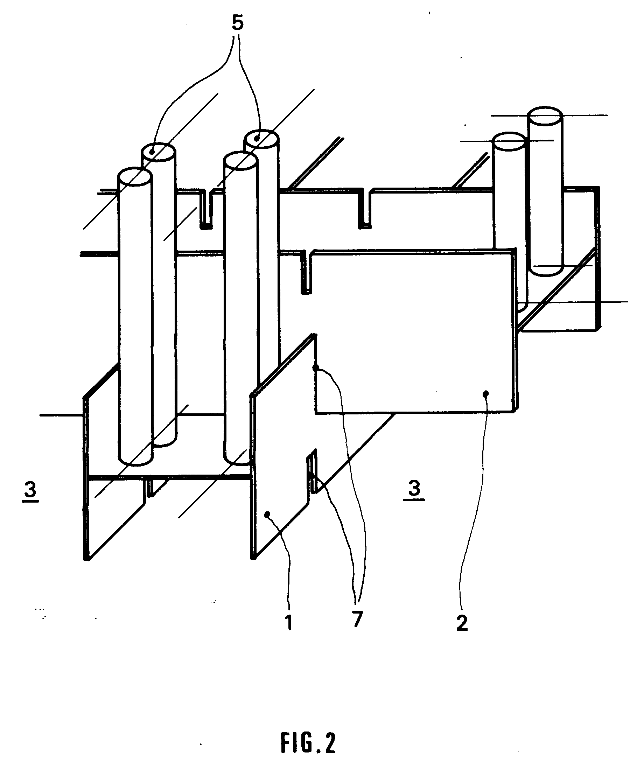

. La figure 2 montre le détail d'un assemblage d'éléments de structure 1 et 2, qui sont des profilés en forme de H, à l'aide d'encoches 7. Ce type d'assemblage permet de supprimer les ajour dans les parois des alvéoles. Les tiges neutrophages 5 sont disposés parallèlement à l'axe de l'alvéole sur deux rangées dans les parois de ladite alvéole.

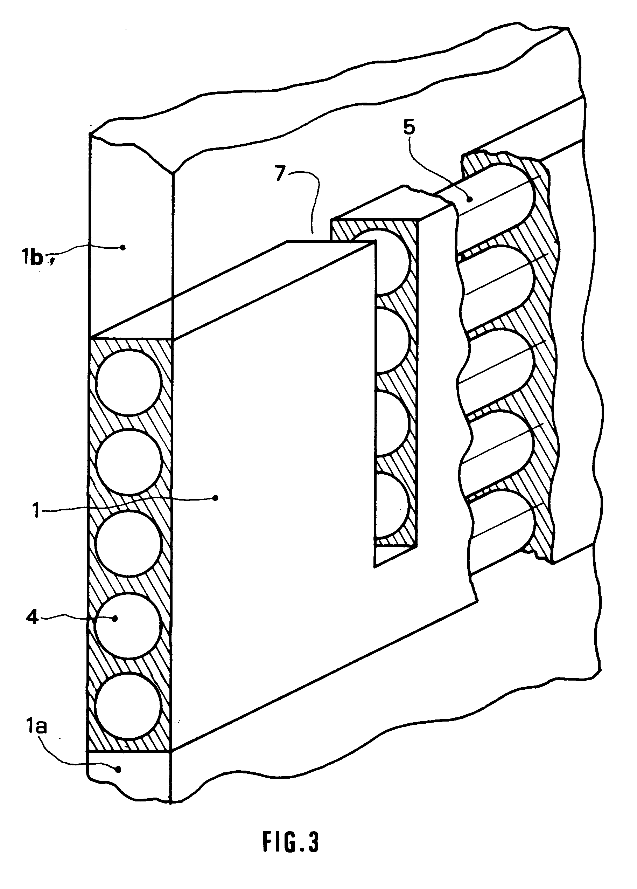

. La figure 3 représente une portion d'empilement vertical d'éléments de structure 1-1a-1b dans une seule direction. Ces éléments de structure sont des profilés plats de section droite rectangulaire, dans lesquels on a disposé des logements tubulaires 4 destinés à recevoir les tiges neutrophages 5 qui sont dans ce cas perpendiculaires à l'axe des alvéoles. Des encoches 7 permettent de solidariser l'élément 1 avec celui qui lui est perpendiculaire (non représenté).

. La figure 4 représente un assemblage où les éléments de structure sont des couples 1 et 2 constitués de deux plats parallèles, lesdits couples 1 et 2 étant orientés dans des directions orthogonales et maintenus solidaires à l'aide d'encoches 7. Ils forment les parois de l'alvéole 3 dans l'épaisseur desquelles sont introduites les tiges neutrophages 5 parallèlement à l'axe de ladite alvéole et avec un jeu diamétral réduit au minimum pour éviter les risques de chevauchement des tiges à l'intérieur d'une paroi.

. La figure 5 représente un casier à alvéoles hexagonales 3. Il est formé d'un empilement d'éléments de structure 1-2-8, qui sont des profilés de section droite en U (ou toute autre forme) pliés régulièrement en forme de ligne brisée, orientés dans trois directions 1-2-8 croisées à 60° de sorte que chaque paroi d'alvéole est ajourée sur 1/3 de sa hauteur. Des tiges neutrophages 5 et des tirants 6 introduits dans les trous 4 complètent comme précédemment la structure du casier.

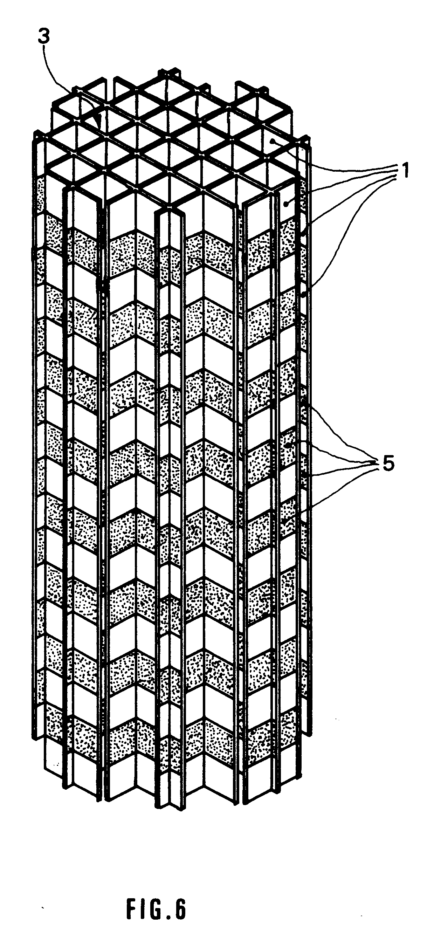

. La figure 6 représente un casier de rangement selon l'invention constitué d'un empilement entrecroisé de profilés en forme de bandes plates dans lequel on a alterné des bandes 1 remplissant les fonctions de résistance mécanique et transfert thermique et des bandes 5 en alliage au bore assurant l'absorption neutronique et une partie du transfert thermique. Bien entendu, les bandes 1 peuvent être ajourées et/ou remplacées par des profilés quelconques de même épaisseur que les bandes 5.

On voit que l'invention, grâce à l'emploi de matériaux standards présente l'avantage de faciliter la construction des casiers de rangement, d'en abaisser le coût, de faciliter leur homologation, et par ailleurs, dans le cas où les tiges neutrophages sont métalliques et perpendiculaires à l'axe des alvéoles, d'améliorer les transferts thermiques grâce aux dites tiges.

## Revendications

1. Casier de rangement d'éléments combustibles nucléaires en vue de leur stockage ou préférentiellement de leur transport à sec, constitué d'une pluralité d'alvéoles prismatiques adjacentes de grande longueur, parallèles entre elles, et destinées à recevoir lesdits éléments combustibles, les parois desdites alvéoles d'épaisseur suffisante assurant des fonctions de résistance mécanique, conductibilité thermique et absorption neutronique et étant composées d'un empilement entrecroisé et ordonné d'éléments de structure allongés, de section constante, disposés en couches successives perpendiculaires à l'axe des alvéoles, caractérisé en ce que les éléments de structure sont du type profilés de modèle courant en matériau assurant la résistance mécanique et la conduction thermique tels que les aciers (ordinaires, inox, spéciaux), l'aluminium, le cuivre, le magnésium ou leurs alliages et que des tiges neutrophages sont disposées à l'intérieur desdites parois parallèlement ou perpendiculairement à l'axe des alvéoles.

2. Casier de rangement d'éléments combustibles nucléaires en vue de leur stockage ou préférentiellement de leur transport à sec, constitué d'une pluralité d'alvéoles prismatiques adjacentes de grande longueur, parallèles entre elles, et destinées à recevoir lesdits éléments combustibles, les parois desdites alvéoles d'épaisseur suffisante assurant des fonctions de résistance mécanique, conductibilité thermique et absorption neutronique et étant composées d'un empilement entrecroisé et ordonné d'éléments de structure allongés, de section constante, disposés en couches successives perpendiculairement à l'axe des alvéoles, caractérisé en ce que des éléments de structures du type profilés de modèle courant en matériau assurant la résistance mécanique et la conductibilité thermique tels que les aciers (ordinaire, inox, spéciaux) l'aluminium, le cuivre, le magnésium ou leurs alliages alternent avec des éléments de structure de formes identiques en matériaux neutrophages.

3. Casier selon l'une quelconque des revendications 1 ou 2, caractérisé en ce que les éléments de structure sont des profilés de modèle courant ayant des sections droites de formes simples telles que L,U,T,I,H, croix, tube ou barre pleine à section carrée ou rectangulaire, bande plate.

4. Casier selon l'une quelconque des revendications 1 à 3, caractérisé en ce que les éléments de structure sont des profilés pliés, les arêtes des pliures étant parallèles entre elles et perpendiculaires au plan contenant la ligne brisée résultante.

5. Casier selon l'une quelconque des revendications 1 ou 2, caractérisé en ce que les éléments de structure sont des couples de bandes plates minces allongées parallèles entre elles, délimitant entre elles un espace d'épaisseur suffisante pouvant recevoir les tiges neutrophages parallèlement ou perpendiculairement à l'axe des alvéoles.

6. Casier selon la revendication 1, caractérisé en ce que les éléments de structure sont des plats filés, allongés dans l'épaisseur desquels sont pratiqués des logements de forme tubulaire, accueillant les tiges neutrophages perpendiculairement à l'axe des alvéoles.

7. Casier selon l'une quelconque des revendications 1 à 6, caractérisé en ce que les éléments de structure sont rendus solidaires les uns des autres par des éléments de liaison tels que goujons, boulons, soudures, plats, équerres, rivets, tirants, plaques ajourées... de façon à maintenir la cohésion et la rigidité de l'empilement.

8. Casier selon l'une quelconque des revendications 1 à 7, caractérisé en ce que les éléments de structure sont munis d'encoches de positionnement coopérant les unes avec les autres de façon à maintenir la cohésion, la rigidité et la compacité de l'empilement.

9. Casier, selon l'une quelconque des revendicqations 1, 3, 7, 8 caractérisé en ce que, quand on utilise un empilement de profilés de type courant autre que des bandes plates, on ménage des ouvertures destinées à loger les tiges neutrophages à l'intérieur des parois parallèlement à l'axe des alvéoles.

10. Casier, selon l'une quelconque des revendications 1, 3 à 9, caractérisé en ce que les tiges neutrophages sont constitués par du fil d'alliage-mère aluminium-bore.

11. Casiers selon l'une quelconque des revendications 1, 3 à 10, caractérisé en ce que au moins une partie des tiges neutrophages sont constituées de plusieurs tiges élémentaires de longueur réduite.

12. Casier, selon l'une quelconque des revendications 1, 3 à 11, caractérisé en ce qu'une partie au moins des éléments de structure de l'empilement est en matériau neutrophage.

**Patentansprüche**

1. Gestell für Lagerung oder vorzugsweise den Trockentransport von Brennelementkassetten mit einer Vielzahl von prismatischen nebeneinander angeordneten Waben großer Länge, die parallel zueinander sind und dazu bestimmt sind, die Brennelemente aufzunehmen, wobei die Seitenwände dieser Waben hinreichend dick sind, um eine ausreichende mechanische Widerstandskraft, eine ausreichende thermische Leitfähigkeit und eine ausreichende Neutronenabsorption zu gewährleisten und wobei die Wände aus einem Stapel gekreuzter und geordneter Elemente länglicher Erstreckung mit konstantem Querschnitt bestehen, wobei die Elemente in aufeinanderfolgenden zur Achse der Waben senkrechten Schichten angeordnet sind, **dadurch gekennzeich-**

**net**, daß die Strukturelemente herkömmliche Profile sind aus einem Material, das eine hinreichende mechanische Widerstandskraft und eine hinreichende thermische Leitfähigkeit gewährleistet, wie z. B. Stähle (einfache, nicht rostende, Spezialstähle) oder Aluminium, Kupfer, Magnesium oder deren Legierungen und dadurch, daß die Neutronen absorbierenden Stäbe im Inneren der Wandung parallel oder senkrecht zu den Achsen der Waben angeordnet sind.

2. Gestell für die Lagerung oder vorzugsweise den Trockentransport von Brennelementkassetten mit einer Vielzahl von prismatischen nebeneinander angeordneten Waben großer Länge, die parallel zueinander sind und dazu bestimmt sind, die Brennelemente aufzunehmen, wobei die Seitenwände dieser Waben hinreichend dick sind, um eine ausreichende mechanische Widerstandskraft, eine ausreichende thermische Leitfähigkeit und eine ausreichende Neutronenabsorption zu gewährleisten und wobei die Wände aus einem Stapel gekreuzter und geordneter Elemente länglicher Erstreckung mit konstantem Querschnitt bestehen, wobei die Elemente in aufeinanderfolgenden zur Achse der Waben senkrechten Schichten angeordnet sind, **dadurch gekennzeichnet**, daß die Strukturelemente übliche Profile aus einem Material sind, das eine hinreichende mechanische Widerstandskraft und eine hinreichende thermische Leitfähigkeit gewährleistet, wie beispielsweise die Stähle (einfache, nicht rostende oder Spezialstähle) Aluminium, Kupfer und Magnesium oder deren Legierungen, und diese Strukturelemente abwechselnd mit Strukturelementen identischer Form aus Neutronen absorbierendem Material angeordnet sind.

3. Gestell nach einem der Ansprüche 1 oder 2, dadurch gekennzeichnet, daß die Strukturelemente übliche Profile mit einfachen Querschnittsformen sind, wobei die Querschnitte L-, U-, T-, I-, H-förmig sind oder in Form eines Kreuzes, eines Rohres oder einer vollen Stange mit quadratischem oder rechteckigem Querschnitt oder wobei die Profile flache Bänder sind.

4. Gestell nach einem der Ansprüche 1 bis 3, dadurch gekennzeichnet, daß die Strukturelemente gefaltete Profile sind, wobei die Kanten der Faltung untereinander parallel und senkrecht zu der Ebene verlaufen, die die resultierende Wellenlinie beinhaltet.

5. Gestell nach einem der Ansprüche 1 oder 2, dadurch gekennzeichnet, daß die Strukturelemente Paare flacher schmaler länglicher untereinander paralleler Bänder sind, die zwischen sich einen Raum ausreichender Dicke begrenzen, der Neutronen absorbierende Stäbe parallel oder senkrecht zur Achse der Waben aufnehmen kann.

6. Gestell nach Anspruch 1, dadurch gekennzeichnet, daß die Strukturelemente gepreßte längliche Platten sind, in deren Dicke rohrförmige Lagerflächen eingearbeitet sind, die die Neutronen absorbierenden Stäbe senkrecht zur Achse der Waben aufnehmen.

7. Gestell nach einem der Ansprüche 1 bis 6, dadurch gekennzeichnet, daß die Strukturelemente miteinander über Verbindungselemente verbunden sind, wie z.B. Bolzen, Stifte, Verschweißungen, Platten, Winkelbänder, Nieten, gelochte Platten, usw., um den Zusammenhalt und die Versteifung des Stapels zu gewährleisten.

8. Gestell nach einem der Ansprüche 1 bis 7, dadurch gekennzeichnet, daß die Strukturelemente mit Positionierungskerben versehen sind, die so zusammenwirken, daß sie den Zusammenhalt, die Versteifung und Kompaktheit des Stapels gewährleisten.

9. Gestell nach einem der Ansprüche 1, 3, 7 und 8, dadurch gekennzeichnet, daß bei Verwendung eines Stapels aus üblichen Profilen wie flachen Bändern, Öffnungen parallel zur Achse der Waben im Inneren der Wandung angebracht werden, um die Neutronen absorbierenden Stangen aufzunehmen.

10. Gestell nach einem der Ansprüche 1 und 3 bis 9, dadurch gekennzeichnet, daß die Neutronen absorbierenden Stäbe aus einer Vorlegierung aus Aluminium und Bor bestehen.

11. Gestell nach einem der Ansprüche 1 und 3 bis 10, dadurch gekennzeichnet, daß mindestens ein Teil der Neutronen absorbierenden Stangen aus mehreren Stangenelementen reduzierter Länge bestehen.

12. Gestell nach einem der Ansprüche 1, 3 bis 11, dadurch gekennzeichnet, daß mindestens ein Teil der Strukturelemente des Stapels aus Neutronen absorbierendem Material besteht.

**Claims**

1. A stowage rack for nuclear fuel elements, for storage or preferably dry transport, comprising a plurality of adjacent prismatic cells which are parallel and very long, designed to receive said fuel elements, wherein the walls of said cells are thick enough to fulfil mechanical strength, thermal conductivity and neutron absorbing functions and are made up of a neat intersecting stack of elongated structural members of constant cross-section, disposed in successive layers perpendicular to the axis of the cells, characterised in that the structural members are of the same type as standard profiles, made of material which provides mechanical strength and thermal conductivity, such as steels (normal, stainless, special), aluminium, copper, magnesium or alloys thereof, and that neutrophage rods are arranged inside said walls parallel or perpendicular to the axis of the cells.

2. A stowage rack for nuclear fuel elements, for storage or preferably dry transport, comprising a plurality of adjacent prismatic cells which are parallel and very long, designed to receive said fuel elements, wherein the walls of said cells are thick enough to fulfil mechanical strength, thermal conductivity and neutron absorbing functions and are made up of a neat intersecting stack of elongated structural members of constant cross-section, disposed in successive layers perpendicular to the axis of the cells, characterised in that structural members of the same type as standard profiles, made of material which provides mechanical strength and thermal conductivity, such as steels (normal, stainless, special), aluminium, copper, magnesium or alloys thereof, alternate with structural members of the same shape made of neutrophage materials.

3. The rack of claim 1 or 2, characterised in that the structural members are standard profiles with simply shaped cross-sections, such as L, U, T, I, H, crosses, tubes, solid bars of square or rectangular cross-section or flat strips.

4. The rack of any of claims 1 to 3, characterised in that the structural members are bent profiles, the edges of the bent portions being parallel with one another and perpendicular to the plane containing the resultant broken line.

5. The rack of claim 1 or 2, characterised in that the structural members are pairs of thin flat strips which are elongated and parallel with one another, and which define between them a space thick enough to receive the neutrophage rods parallel or perpendicular to the axis of the cells.

6. The rack of claim 1, characterised in that the structural members are elongated, extruded flat bars, and that tubular receptacles are formed in the thickness of the bars to receive the neutrophage rods perpendicular to the axis of the cells.

7. The rack of any of claims 1 to 6, characterised in that the structural members are rigidly connected to one another by elements such as pins, bolts, welds, flat bars, angles, rivets, tie rods, punched plates or the like, so that the cohesion and rigidity of the stack is maintained.

8. The rack of any of claims 1 to 7, characterised in that the structural members are provided with positioning notches which interact to maintain the cohesion, rigidity and compactness of the stack.

9. The rack of any of claims 1, 3, 7 or 8, characterised in that when a stack of standard profiles is used, other than flat strips, openings are formed to house the neutrophage rods inside the walls parallel with the axis of the cells.

10. The rack of any of claims 1 or 3 to 9, characterised in that the neutrophage rods are made of wire of aluminium-boron master alloy.

11. The racks of any of claims 1 or 3 to 10, characterised in that at least some of the neutrophage rods are made up of a plurality of component rods of reduced length.

12. The rack of any of claims 1 or 3 to 11, characterised in that at least some of the structural members in the stack are made of neutrophage material.

FIG.1

FIG.2

FIG.3

FIG.4

FIG.5

FIG.6